# EUROPÄISCHE PATENTANMELDUNG

(11) **EP 3 944 922 A1**
(43) Veröffentlichungstag der Anmeldung: **02.02.2022**
(21) Anmeldenummer: 21183415.5
(22) Anmeldetag: 02.07.2021
(51) Int. Cl.: B23K 26/0622, B23K 26/082, B23K 26/08, B23K 26/21, B23K 26/26, B23K 26/323, H01M 10/04, H01M 10/0525, H01M 10/0585, H01M 50/528, H01M 50/531, B23K 101/36, B23K 101/38, B23K 103/10, B23K 103/12

(54) **VERSCHWEISSEN VON METALLISCHEN FOLIEN MITTELS LASER**

(30) Priorität: 31.07.2020 DE 102020120263
(71) Anmelder: Manz AG, 72768 Reutlingen (DE)
(72) Erfinder: MOLDOVAN, Vasile Raul, 70567 Stuttgart (DE); SOERYANTO, Denny, 72654 Neckartenzlingen (DE); WALTER, Dmitrij, 72655 Altdorf (DE); HOFMANN, Markus, 70563 Stuttgart (DE)
(74) Vertreter: Kohler Schmid Möbus Patentanwälte

(57) **Zusammenfassung**

Verfahren zum Verschweißen von metallischen Folien (1) mit den Verfahrensschritten:
a. Bilden eines Parallelstoßes (3) mit mehreren zu verbindenden metallischen Folien (1), indem die Folien (1) so angeordnet werden, dass sie breitflächig aneinander liegen,
b. Verschweißen der metallischen Folien (1), indem ein Laserstrahl (6) auf eine Stirnseite (4) des Parallelstoßes (3) der Folien (1) gerichtet wird, so dass eine die Folien (1) verbindende Schweißnaht (8) gebildet wird.

## Beschreibung

Die Erfindung betrifft ein Verfahren zum Verschweißen von metallischen Folien mit den Verfahrensschritten:
a. Bilden eines Parallelstoßes mit mehreren zu verbindenden metallischen Folien, indem die Folien so angeordnet werden, dass sie breitflächig aneinander liegen,
b. Verschweißen der metallischen Folien.

In der Fertigungskette von Li-Ionen-Batterien muss ein Stapel, bestehend aus einer Mehrzahl von dünnen metallischen Folien, mit einem zentralen Stromableiter verbunden werden. Abhängig vom Zelldesign und der Energiedichte müssen 10 und mehr Elektrodenfolien, also Kathodenfolien oder Anodenfolien, mit einer Dicke von etwa 10 µm an einen Ableiter angeschweißt werden.

Um die Leistung von Akkumulatoren bzw. Batterien zu erhöhen, ist man bestrebt, die Anzahl der Elektroden innerhalb einer Batterie zu vergrößern. Dadurch erhöht sich ebenfalls die Anzahl der zu verschweißenden Elektrodenfolien. Es besteht die grundsätzliche Anforderung, Energiespeicher mit einer erhöhten Energiedichte und Aufnahmekapazität bereitzustellen. Batteriezellen werden üblicherweise dadurch hergestellt, dass Anodenblätter, Kathodenblätter und dazwischen angeordnete Separatoren gestapelt werden und anschließend die zugeordneten Stromleiter der Anodenblätter und Kathodenblätter jeweils verschweißt werden.

Dabei ist es zum einen bekannt, Widerstandsschweißen zu verwenden. Nachteilig am Widerstandsschweißen ist, dass nur Werkstücke mit einem relativ geringen Volumen miteinander verschweißt werden können. Somit besteht eine Limitierung hinsichtlich der Anzahl von Lagen, die gestapelt werden können.

Weiterhin ist es bekannt, die Stromleiter durch Ultraschallschweißen zu verbinden. Dazu ist es notwendig, die Stromleiter zusammenzupressen. Beim Ultraschallschweißen können Partikel entstehen, die die Funktionsfähigkeit der Batteriezelle beeinträchtigen. Außerdem ist auch das Ultraschallschweißen hinsichtlich der Anzahl von Lagen, die miteinander verschweißt werden können, beschränkt.

Es ist auch bekannt, die Stromleiter mittels Laserschweißens zu verbinden. Dabei muss darauf geachtet werden, dass zwischen den Stromleitern kein Luftspalt besteht.

Beim Schweißen mittels Laser werden die Folien mit einem Ableiter überlappend angeordnet. Der Laserstahl wird auf die Breitseite der Elektrodenblätter gerichtet. Durch die Elektrodenblätter hindurch wird bis zum Ableiter geschweißt. Mit steigender Anzahl an Elektroden wächst die Dicke des Stapels und damit die Materialstärke, durch welche geschweißt werden muss. Um eine Anbindung an einen Ableiter gewährleisten zu können, muss die Streckenenergie erhöht werden. Eine Erhöhung der Streckenenergie kann beispielsweise durch Erhöhung der Laserleistung oder durch eine Verringerung der Schweißgeschwindigkeit realisiert werden. Durch eine höhere Streckenenergie steigt die mechanische sowie die thermische Belastung für die im Vergleich zum Stromableiter sehr dünnen Elektrodenfolien.

Zur Reduzierung der Belastung für die Elektrodenfolien können die Positionen der Schweißpartner getauscht werden, sodass der Laserstahl zuerst auf den Ableiter trifft und nach Durchschweißung des Ableiters die Folien miteinander verschweißt werden. Im Vergleich zur herkömmlichen Anordnung ist bei dieser Anordnung die erforderliche Streckenenergie noch deutlich höher, da neben dem Elektrodenstapel auch die komplette Dicke des Ableiters durchgeschweißt werden muss.

Eine weitere Anforderung ist, die Prozesstemperatur so gering wie möglich zu halten, da sich in der Nähe der Schweißstelle temperaturempfindliche Komponenten wie Siegelnaht, Separator oder Aktivmaterial des Elektrodenblatts befinden.

Aufgabe der vorliegenden Erfindung ist es daher, ein Verfahren bereitzustellen, mit dem dünne metallische Folien, insbesondere Elektrodenfolien, im Wesentlichen unabhängig von der Dicke des aus den Folien gebildeten Stapels, verschweißt werden können, ohne die Folien thermisch übermäßig zu beanspruchen.

Gelöst wird diese Aufgabe erfindungsgemäß durch ein Verfahren zum Verschweißen von metallischen Folien mit den Verfahrensschritten:
a. Bilden eines Parallelstoßes mit mehreren zu verbindenden metallischen Folien, indem die Folien so angeordnet werden, dass sie breitflächig aneinander liegen,
b. Verschweißen der metallischen Folien, indem ein Laserstahl auf eine Stirnseite des Parallelstoßes der Folien gerichtet wird, sodass eine die Folien verbindende Schweißnaht gebildet wird.

Die Folien können dabei eine Dicke im Bereich zwischen 5 und 15 µm, vorzugsweise eine Dicke von etwa 10 µm, aufweisen.

Mit dem erfindungsgemäßen Verfahren ist es möglich, eine große Anzahl von Folien, insbesondere Elektrodenfolien, zu verschweißen. Insbesondere stellt die Dicke des Parallelstoßes keinen limitierten Faktor dar, da nur die Stirnseite geschweißt wird. Insbesondere muss nicht von einer Breitseite aus durch die gesamte Dicke des Stapels geschweißt werden.

Die zu erreichende Schweißnahttiefe ist nicht mehr von der Anzahl der Folien abhängig. Vielmehr wird die zu erreichende Schweißnahttiefe durch den zur sicheren Stromführung erforderlichen Anbindungsquerschnitt bestimmt. Mit dem erfindungsgemäßen Verfahren kann ein großer Anbindungsquerschnitt durch eine weniger tiefe und lange Schweißnaht erreicht werden. Durch die Reduzierung der Schweißnahttiefe ist die zum Schweißen erforderliche Streckenenergie und somit der Energieeintrag in den Parallelstoß deutlich geringer. Die mechanische und thermische Belastung der Folien wird reduziert, wodurch es zu geringerer bzw. keiner Ausbildung eines Risses kommt.

Die Stirnseite des Parallelstoßes entspricht dabei der Seite des Parallelstoßes, der durch die Stirnseiten der Folien gebildet wird, also der Schmalseite der Folien, während die Folien breitflächig, d. h. mit ihren Ober- und Unterseiten aneinander anliegen.

Besondere Vorteile ergeben sich, wenn der Parallelstoß von metallischen Folien überlappend an einem elektrischen Leiter, insbesondere Ableiter, angeordnet wird und der elektrische Leiter mit den metallischen Folien verschweißt wird, indem der Laserstrahl stirnseitig auf den metallischen Folien im Bereich des elektrischen Leiters gerichtet wird. Insbesondere kann der elektrische Leiter mit dem Parallelstoß verschweißt werden, ohne dass der Folienstapel oder der elektrische Leiter durchgeschweißt werden muss. Dadurch, dass der Laserstrahl auf einen Randbereich des Parallelstoßes gerichtet wird, wird genügend Prozessenergie eingeleitet, um die unteren Lagen des Parallelstoßes, die an den elektrischen Leiter angrenzen, mit diesem zu verschweißen.

Als besonders günstig hat sich herausgestellt, wenn der Laserstrahl in einem Winkel α im Bereich 0≤a≤70° zur Normalen der Stirnseite auf die Stirnseite des Parallelstoßes gerichtet wird. Insbesondere, wenn der Laserstrahl schräg auf die Stirnseite gerichtet wird, kann eine besonders gute Verschweißung mit einem elektrischen Leiter erfolgen, an dem der Parallelstoß angeordnet ist.

Das Verfahren kann unter Verwendung einer Laserstrahlquelle durchgeführt werden, die geeignet ist, Kupfer und Aluminium zu verschweißen. Eine solche Laserstahlquelle ist besonders geeignet, Elektroden bzw. Stromleiter von Elektrodenfolien mit einem elektrischen Leiter zu verschweißen.

Der Laserstrahl kann vorzugsweise eine Wellenlänge im Bereich 450 - 1100 nm aufweisen. Mit einem Laserstrahl mit einer solchen Wellenlänge können unterschiedliche Materialien verschweißt werden. Insbesondere kann Kupfer oder Aluminium verschweißt werden.

Die Laserstrahlquelle kann eine mittlere Leistung im Bereich 300 - 5000 W aufweisen.

Weiterhin kann die Laserstahlquelle im Dauerstrich-Betrieb oder im gepulsten Betrieb oder im modulierten Betriebsmodus betrieben werden. Der Betriebsmode kann je nach zu verschweißenden Komponenten gewählt werden. Unter einem modulierten Betriebsmodus ist dabei das Schweißen mit zeitlicher oder örtlicher Modulation zu verstehen. Örtliche Modulation beschreibt eine Bewegung des Laserstrahls auf der Oberfläche des zu schweißenden Materials z. B. beim Wobbelschweißen. Eine zeitliche Modulation kann sich dadurch auszeichnen, dass die Leistung des Lasers einen sinusförmigen Verlauf hat, was sich vorteilhaft auf die Schmelzbadbewegung auswirkt.

Um die Folien nicht nur punktuell zu verschweißen, ist es vorteilhaft, wenn der Laserstrahl während des Schweißens entlang der Stirnseite bewegt wird. Dabei kann der Laserstrahl in unterschiedlichen Richtungen bewegt werden, um eine möglichst gute Verbindung der Folien zu erreichen.

Beispielsweise kann der Laserstahl zumindest abschnittsweise geradlinig über die Stirnseite bewegt werden. Es ist jedoch auch denkbar, dass der Laserstrahl zumindest abschnittsweise oszillierend über die Stirnseite bewegt wird. Dadurch kann beispielsweise eine sinusförmige oder mäanderförmige Schweißnaht erzeugt werden. Auch eine Kreisform ist möglich. Außerdem ist es denkbar, durch den Laserstrahl eine Steppnaht zu erzeugen. Grundsätzlich ist es denkbar, dass der Laserstrahl so über die Stirnseite bewegt wird, dass die Schweißnaht eine beliebige, insbesondere vorgegebene, Geometrie einnimmt.

Um zu verhindern, dass zwischen den Folien und/oder dem elektrischen Leiter Lufteinschlüsse bestehen, die die Qualität der Schweißnaht negativ beeinflussen, kann vorgesehen sein, dass der Parallelstoß aus metallischen Folien gegebenenfalls zusammen mit dem elektrischen Leiter während des Schweißens geklemmt wird.

Die Klemmkraft zum Klemmen des Parallelstoßes kann eingestellt werden. Insbesondere kann die Klemmkraft in Abhängigkeit von der Dicke des Parallelstoßes oder der Anzahl der Folien eingestellt werden.

Um die thermische Beanspruchung des Parallelstoßes während des Schweißens möglichst gering zu halten, kann vorgesehen sein, dass Prozesswärme während des Schweißens abgeleitet wird. Prozesswärme kann abgeleitet werden, indem die Halterung, mit der der Parallelstoß während des Schweißens geklemmt wird, aus Materialien mit besonders guter Wärmeleitfähigkeit hergestellt wird, z. B. Kupfer. Falls eine noch stärkere Kühlung kann erreicht werden, wenn die Halterung/Spannvorrichtung aktiv gekühlt wird. Alternativ oder zusätzlich kann der Parallelstoß während des Schweißens aktiv gekühlt werden.

Das erfindungsgemäße Verfahren kann insbesondere zum Verbinden von Stromleitern von Elektrodenblättern, insbesondere Anodenblättern oder Kathodenblättern, verwendet werden. Insbesondere kann das erfindungsgemäße Verfahren bei der Herstellung von Li-Ionen-Batterien zum Einsatz kommen, wobei die Stromleiter von Anodenblättern oder von Kathodenblättern mit entsprechenden elektrischen Leitern, insbesondere Ableitern, mittels Laserschweißen verbunden werden.

Weitere Merkmale und Vorteile der Erfindung ergeben sich aus der nachfolgenden Beschreibung eines Ausführungsbeispiels der Erfindung.

Es zeigen:
- Fig. 1: eine Seitenansicht auf einen Parallelstoß aus Stromleitern von Elektrodenblättern, die mit einem Ableiter verschweißt werden.
- Fig. 2: eine Ansicht auf die Stirnseite des Parallelstoßes.

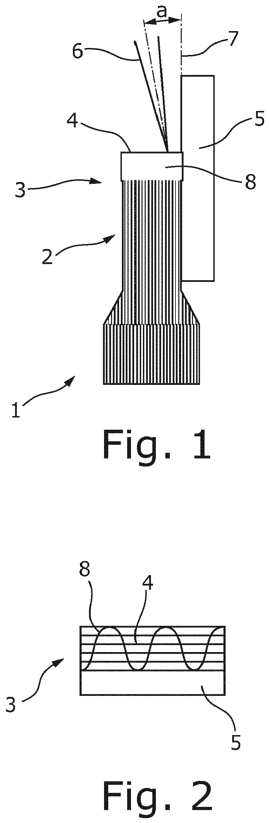

Die Figur 1 zeigt einen Stapel von als Elektrodenblättern, insbesondere Anodenblättern oder Kathodenblättern, ausgebildeten Folien 1. An den Folien 1 sind Stromleiter 2 angeordnet. Die Folien 1 und Stromleiter 2 sind breitflächig aufeinander angeordnet bzw. gestapelt und bilden dadurch einen Parallelstoß 3. Die Stromleiter 2sind ebenfalls als Folien zu betrachten. Der Parallelstoß 3 weist eine Stirnseite 4 auf, die durch die Stirnseiten der gestapelten Folien 1 bzw. Stromleiter 2 gebildet ist. Der Parallelstoß 3 liegt an einem als Ableiter ausgebildeten elektrischen Leiter 5 an. Der elektrische Leiter ist aus Kupfer oder Aluminium ausgebildet und dicker als eine einzelne Folie 1 bzw. ein einzelner Stromleiter 2.

Die Folien 1 bzw. Stromleiter 2 und der elektrische Leiter 3 können aus Aluminium oder Kupfer ausgebildet sein.

Auf die Stirnseite 4 wird ein Laserstrahl 6 gerichtet. Insbesondere wird der Laserstrahl 6 in einem Winkel α zur Normalen 7 der Stirnseite 4 auf die Stirnseite 4 gerichtet. Dabei wird der Laserstrahl 6 unter Beibehaltung des Winkels α entlang der Stirnseite 4 bzw. zweidimensional über die Stirnseite 4 bewegt, sodass eine Schweißnaht 8 entsteht.

Es ist zu erkennen, dass sich die Schweißnaht 8 in einem Randbereich des Parallelstoßes 2, insbesondere in dem Randbereich, der an den elektrischen Leiter 5 angrenzt, in den elektrischen Leiter 5 erstreckt, sodass auf diese Weise der Parallelstoß 3 mit dem elektrischen Leiter 5 verschweißt wird. Durch die Schweißnaht 8 werden die Folien 1 bzw. deren Stromleiter 2 stirnseitig mechanisch und elektrisch leitend verbunden.

Die Figur 2 zeigt eine Draufsicht von oben auf die Anordnung gemäß der Figur 1. Hier ist zu erkennen, dass die Schweißnaht 8 sinusförmig über die Stirnseite 4 verläuft. Die Schweißnaht 4 wurde dabei erzeugt, indem der Laserstrahl 6 mit unterschiedlichen Richtungskomponenten über die Stirnseite 4 bewegt wurde. In den Bereichen, in denen die Schweißnaht 8 den elektrischen Leiter 5 berührt, ist dieser mit dem Parallelstoß 3 verbunden.

## Patentansprüche

1. Verfahren zum Verschweißen von metallischen Folien (1) mit den Verfahrensschritten:
a. Bilden eines Parallelstoßes (3) mit mehreren zu verbindenden metallischen Folien (1), indem die Folien (1) so angeordnet werden, dass sie breitflächig aneinander liegen,
b. Verschweißen der metallischen Folien (1), indem ein Laserstrahl (6) auf eine Stirnseite (4) des Parallelstoßes (3) der Folien (1) gerichtet wird, so dass eine die Folien (1) verbindende Schweißnaht (8) gebildet wird.

2. Verfahren nach Anspruch 1, **dadurch gekennzeichnet, dass** der Parallelstoß (3) von metallischen Folien (1) überlappend an einem elektrischen Leiter (5) angeordnet wird und der elektrische Leiter (5) mit den metallischen Folien (1) verschweißt wird, indem der Laserstrahl (6) stirnseitig auf die metallischen Folien (1) im Bereich des elektrischen Leiters (5) gerichtet wird.

3. Verfahren nach einem der vorhergehenden Ansprüche, **dadurch gekennzeichnet, dass** der Laserstrahl (6) in einem Winkel α im Bereich 0≤a≤70° zur Normalen (7) der Stirnseite (4) auf die Stirnseite (4) des Parallelstoßes (3) gerichtet wird.

4. Verfahren nach einem der vorhergehenden Ansprüche, **dadurch gekennzeichnet, dass** das Verfahren unter Verwendung einer Laserstrahlquelle durchgeführt wird, die geeignet ist, Kupfer und Aluminium zu verschweißen.

5. Verfahren nach einem der vorhergehenden Ansprüche, **dadurch gekennzeichnet, dass** der Laserstrahl (6) eine Wellenlänge im Bereich 450 - 1100nm aufweist.

6. Verfahren nach einem der vorhergehenden Ansprüche, **dadurch gekennzeichnet, dass** eine Laserstrahlquelle verwendet wird, die eine mittlere Leistung im Bereich 300 - 5000 W aufweist.

7. Verfahren nach einem der vorhergehenden Ansprüche, **dadurch gekennzeichnet, dass** die Laserstrahlquelle im Dauerstrich-Betrieb oder im gepulsten Betrieb oder im modulierten Betriebsmodus betrieben wird.

8. Verfahren nach einem der vorhergehenden Ansprüche, **dadurch gekennzeichnet, dass** der Laserstrahl (6) während des Schweißens entlang der Stirnseite (4) bewegt wird.

9. Verfahren nach einem der vorhergehenden Ansprüche, **dadurch gekennzeichnet, dass** der Laserstrahl (6) zumindest abschnittsweise geradlinig über die Stirnseite (4) bewegt wird.

10. Verfahren nach einem der vorhergehenden Ansprüche, **dadurch gekennzeichnet, dass** der Laserstrahl (6) zumindest abschnittsweise oszillierend über die Stirnseite (4) bewegt wird.

11. Verfahren nach einem der vorhergehenden Ansprüche, **dadurch gekennzeichnet, dass** durch den Laserstrahl (6) eine Steppnaht erzeugt wird.

12. Verfahren nach einem der vorhergehenden Ansprüche, **dadurch gekennzeichnet, dass** der Parallelstoß (3) aus metallischen Folien (1) gegebenenfalls zusammen mit dem elektrischen Leiter (5) während des Schweißens geklemmt wird.

13. Verfahren nach einem der vorhergehenden Ansprüche, **dadurch gekennzeichnet, dass** die Klemmkraft zum Klemmen des Parallelstoßes (3) eingestellt wird, insbesondere in Abhängigkeit von der Dicke des Parallelstoßes (3) oder der Anzahl der Folien (1) eingestellt wird.

14. Verfahren nach einem der vorhergehenden Ansprüche, **dadurch gekennzeichnet, dass** Prozesswärme während des Schweißens abgeleitet wird.

15. Verwendung des Verfahrens nach einem der vorhergehenden Ansprüche zum Verbinden von Stromleitern (2) von Elektrodenblättern, insbesondere von Anodenblättern oder Kathodenblättern.

16. Verwendung des Verfahrens nach einem der vorhergehenden Ansprüche bei der Herstellung von Li-Ionen-Batterien.
